(19) Europäisches Patentamt / European Patent Office / Office européen des brevets

(11) **EP 3 649 728 B1**

(12) **FASCICULE DE BREVET EUROPEEN**

(45) Date de publication et mention de la délivrance du brevet:
**02.07.2025 Bulletin 2025/27**

(21) Numéro de dépôt: **18749461.2**

(22) Date de dépôt: **04.07.2018**

(51) Classification Internationale des Brevets (IPC):
**H02M 1/08** *(2006.01)* **H02M 1/42** *(2007.01)*

(52) Classification Coopérative des Brevets (CPC):
**H02M 1/082; H02M 1/4208; H02M 7/4835;**
Y02B 70/10; Y02E 60/60

(86) Numéro de dépôt international:
**PCT/FR2018/051664**

(87) Numéro de publication internationale:
**WO 2019/008275 (10.01.2019 Gazette 2019/02)**

(54) **CONVERTISSEUR MUNI D'UN MODULE DE GESTION DE L'ENERGIE EN PARTIE ALTERNATIVE**

UMWANDLER MIT STEUERUNGSEINHEIT VON PARTIELLER WECHSELENERGIE

CONVERTER USING PARTLY AC ENERGY MANAGEMENT MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.07.2017 FR 1756433**

(43) Date de publication de la demande:
**13.05.2020 Bulletin 2020/20**

(73) Titulaires:
• **Supergrid Institute**
  **69100 Villeurbanne (FR)**
• **CentraleSupélec**
  **91190 - Gif-sur-Yvette (FR)**

(72) Inventeurs:
• **SHINODA, Kosei**
  **69001 Lyon (FR)**
• **DAI, Jing**
  **91190 Gif-sur-Yvette (FR)**
• **BENCHAIB, Abdelkrim**
  **78180 Montigny le Bretonneux (FR)**
• **GUILLAUD, Xavier**
  **59830 Bachy (FR)**

(74) Mandataire: **Cabinet Beau de Loménie**
  **Immeuble Eurocentre**
  **179 Boulevard de Turin**
  **59777 Lille (FR)**

(56) Documents cités:
EP-A1- 3 142 236     WO-A1-2017/021642
US-A1- 2016 299 195

**Description**

Arrière-plan de l'invention

La présente invention concerne le domaine technique des installations de transport de courant continu haute tension multi-terminaux (HVDC) dans lesquels des stations intègrent des convertisseurs modulaires multi-niveaux (MMC).

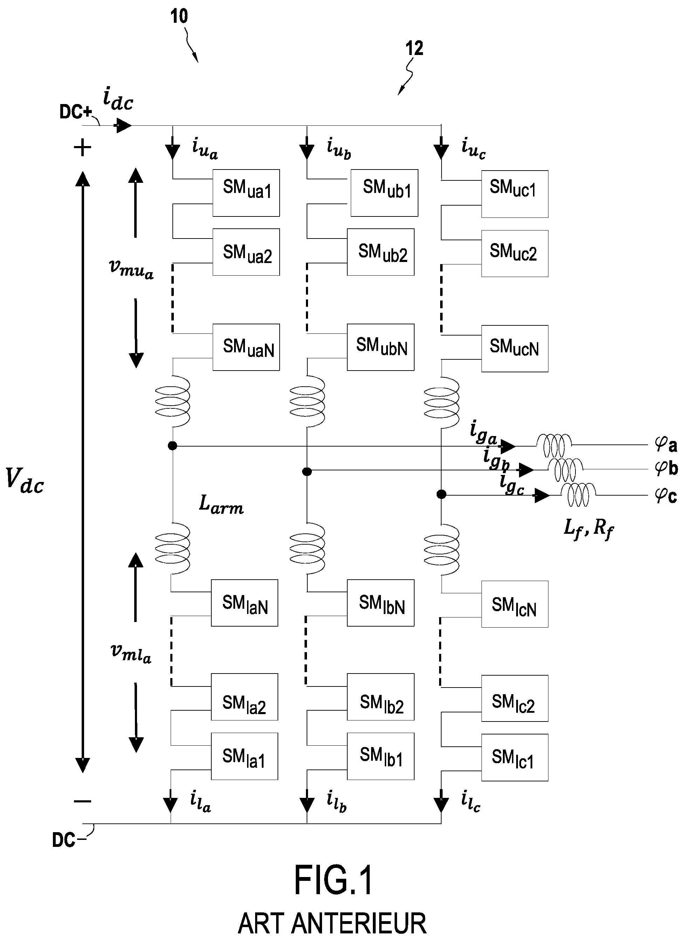

Sur la figure **1,** on a représenté de manière schématique un ensemble **12** de sous-modules d'un convertisseur modulaire multi-niveaux **10** selon la technique antérieure. Ce convertisseur **10** comporte, pour un courant triphasé d'entrée/sortie (comportant trois phases $\varphi_a$, $\varphi_b$ et $\varphi_c$), trois bras de conversion qui sont référencés par les indices *a*, *b* et *c* sur les différents composants de la figure **1.**

Chaque bras de conversion comprend un demi-bras supérieur et un demi-bras inférieur (indiqués par les indices « u » pour supérieur et « I » pour inférieur), dont chacun relie une borne DC+ ou DC- du réseau d'alimentation électrique continu (DC) à une borne du réseau d'alimentation électrique alternatif (AC). En particulier, chacun des bras est connecté à une des trois lignes de phase $\varphi_a$, $\varphi_b$ et $\varphi_c$ du réseau d'alimentation électrique alternatif. Il est à noter que les termes « bras » et « demi-bras » sont traduits en anglais respectivement par « leg » et « arm ». La figure **1** représente un ensemble **12** de sous-module, dans lequel chaque demi-bras est traversé par un courant $i_{xi}$ avec (*x* indiquant si le demi-bras est supérieur ou inférieur et l'indice *i* indiquant le bras). En outre, chaque demi-bras comprend une pluralité de sous-modules $SM_{xij}$ qui peuvent être commandés suivant une séquence souhaitée (avec x indiquant si le demi-bras est supérieur ou inférieur, *i* indiquant la ligne de phase à laquelle le demi-bras est associé, et *j* étant le numéro du sous-module parmi les sous-modules en série dans le demi-bras). Ici, seuls trois sous-modules ont été représentés par demi-bras. En pratique, chaque demi-bras inférieur ou supérieur peut comporter un nombre N de sous-modules, pouvant aller de quelques dizaines à quelques centaines.

Chaque sous-module $SM_{xij}$ comporte un système de stockage d'énergie tel qu'au moins un condensateur et un organe de commande pour connecter sélectivement ce condensateur en série entre les bornes du sous-module ou pour le contourner. Les sous-modules sont commandés selon une séquence choisie pour faire varier progressivement le nombre d'éléments de stockage d'énergie qui sont connectés en série dans un demi-bras du convertisseur **10** de façon à fournir plusieurs niveaux de tension. En outre, sur la figure **1,** $V_{dc}$ désigne la tension au point de connexion du convertisseur au réseau d'alimentation électrique continu. $i_{dc}$ désigne le courant du réseau d'alimentation électrique continu, tandis que des courants $i_{ga}$, $i_{gb}$ et $i_{gc}$ traversent les trois lignes de phase $\varphi_a$, $\varphi_b$ et $\varphi_c$. De plus, chaque demi-bras possède une inductance $L_{arm}$ et chaque ligne de phase comporte une inductance $L_f$ et une résistance $R_f$.

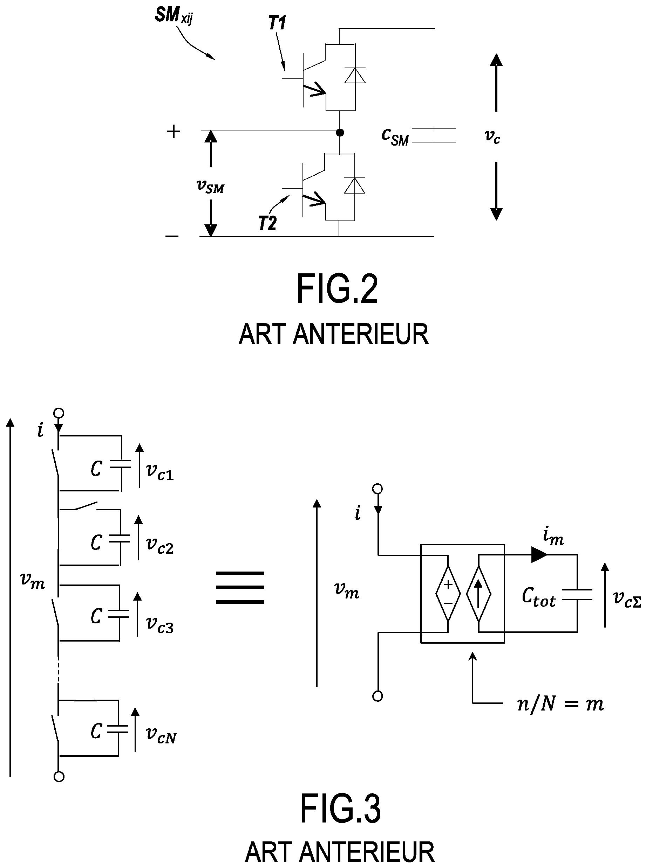

La figure **2** illustre un sous-module $SM_{xij}$ appartenant au convertisseur **10** de la figure **1.** Ce sous-module $SM_{xij}$ a une tension $v_{SM}$ à ses bornes. Dans ce sous-module, chaque organe de commande comporte un premier élément de commutation électronique **T1** tel qu'un transistor bipolaire à grille isolée *(« IGBT: Insulated Gate Bipolar Transistor»* en langue anglaise) connecté en série avec un élément de stockage d'une énergie électrique, ici un condensateur $C_{SM}$. Ce premier élément de commutation **T1** et ce condensateur $C_{SM}$ sont montés en parallèle d'un deuxième élément de commutation électronique **T2,** également un transistor bipolaire à grille isolée (IGBT). Ce deuxième élément de commutation électronique **T2** est couplé entre les bornes d'entrée et de sortie du sous-module $SM_{xij}$. Les premier et deuxième éléments de commutation **T1** et **T2** sont tous deux associés à une diode antiparallèle représentée sur la figure **2.**

En fonctionnement, le sous-module peut être commandé dans deux états de commande.

Dans un premier état, dit état « *on* » ou commandé, le premier élément de commutation **T1** et le deuxième élément de commutation **T2** sont configurés de manière à connecter l'élément de stockage d'énergie $C_{SM}$ en série avec les autres sous-modules. Dans un deuxième état, dit état « *off»* ou non-commandé, le premier élément de commutation **T1** et le deuxième élément de commutation **T2** sont configurés de sorte à court-circuiter l'élément de stockage d'énergie $C_{SM}$.

Il est connu que chaque demi-bras, ayant une tension $v_m$ à ses bornes, peut être modélisé par une source de tension modélisée, ayant une tension $v_m$ à ses bornes, dont le rapport cyclique dépend du nombre de sous-modules commandés, et par un condensateur $C_{tot}$ modélisé connecté à la source de tension. Cette modélisation a été schématisée en figure **3,** sur laquelle on voit un demi-bras, traversé par un courant *i* et la modélisation obtenue. $C_{tot}$ est la capacité équivalente dans un demi-bras, de sorte que l'inverse de cette capacité équivalente du demi-bras $C_{tot}$ est égale à la somme des inverses des capacités des sous-modules commandés dans ce demi-bras, selon :

$$\frac{1}{C_{tot}} = \frac{1}{C_1} + \frac{1}{C_2} + \cdots + \frac{1}{C_N}$$

où $C_1$, $C_2$, ..., $C_j$, ..., $C_N$ sont les capacités du *j*ème condensateur dans le demi-bras.

Ainsi, la tension $v_{c\Sigma}$ aux bornes du condensateur $C_{tot}$ modélisé est égale à la somme des tensions $v_{cj}$ aux bornes des condensateurs des sous-modules dans le demi-bras (avec *j* allant de 1 à N et indiquant le numéro du condensateur et donc du sous-module). Par ailleurs, chaque condensateur modélisé $C_{tot}$ est traversé par un courant $i_m$. Dans la présente demande, par abus de langage, $C_{tot}$ désigne à la fois le condensateur modélisé et la valeur de sa capacité. En contrôlant la séquence de commande des sous-modules, afin de faire varier progressivement le nombre d'éléments de stockage d'énergie connectés en série, l'énergie du condensateur $C_{tot}$ modélisé et donc la tension aux bornes de chaque source de tension modélisée peuvent être diminuées ou augmentées.

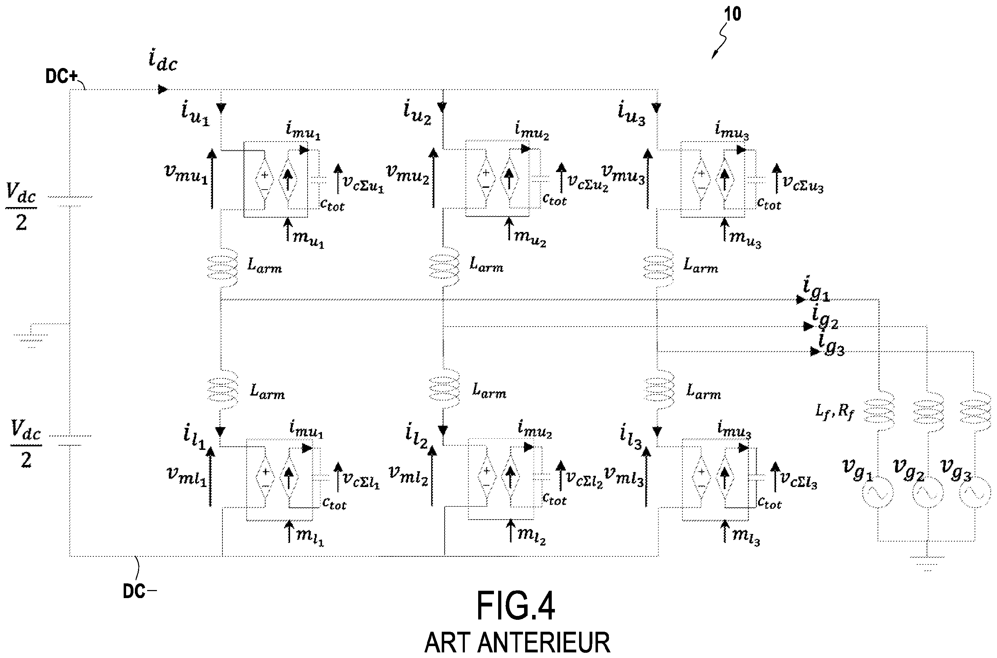

Dans l'art antérieur, on trouve donc une configuration équivalente de l'ensemble des sous-modules du convertisseur MMC **10** illustrée en figure **4.** Sur cette figure, le convertisseur est un convertisseur analogue à celui décrit en référence à la figure **1,** et dans lequel chaque demi-bras a été remplacé par sa modélisation. En outre, chaque ligne de phase du réseau d'alimentation électrique alternatif est associée à un courant $i_{gi}$ et une tension $v_{gi}$ (l'indice $i$ indiquant le numéro du bras).

Ici, chacune des sources de tension modélisées comporte en ses bornes une tension $v_{mxi}$ et chaque condensateur modélisé $C_{tot}$ est traversé par un courant $i_{mxi}$ et comporte en ses bornes une tension $v_{c\Sigma xi}$ (avec x indiquant si le demi-bras est supérieur ou inférieur et i indiquant le numéro du bras). On peut par ailleurs noter qu'il est possible de décomposer le convertisseur MMC en une partie alternative imaginaire et une partie continue imaginaire (en entrée ou en sortie, suivant que le convertisseur est configuré pour convertir une énergie alternative en énergie continue ou l'inverse), où l'évolution de l'énergie totale stockée dans les condensateurs des sous-modules est égale à la différence entre la puissance entrant dans le convertisseur et la puissance sortante.

Il est connu des convertisseurs de type « Voltage Source Converter » (bien connus de l'homme du métier sous l'acronyme « *VSC»),* possédant un condensateur de station connecté en parallèle du réseau d'alimentation électrique continu. L'inconvénient d'un tel condensateur en parallèle est qu'il ne permet pas un découplage du convertisseur avec la tension du réseau d'alimentation électrique continu. De plus ce type de convertisseur nécessite l'utilisation de nombreux filtres pour obtenir des signaux convertis convenables.

En outre, l'inertie du réseau d'alimentation électrique continu dépend de sa capacité, de sorte qu'une grande capacité augmente l'inertie du réseau d'alimentation électrique continu. Ainsi, une grande capacité du réseau et donc une grande inertie lui permet de mieux résister aux perturbations. Inversement, une faible capacité de réseau, et donc une faible inertie, permet de réguler plus facilement et plus précisément la tension au point de connexion du convertisseur au réseau d'alimentation électrique continu.

Or, contrairement aux convertisseurs de type Voltage Source Converter, les convertisseurs MMC ne comportent pas de condensateur de station connecté en parallèle et pouvant influer sur la stabilité du réseau d'alimentation électrique continu. Les convertisseurs modulaires multi-niveaux présentent donc l'avantage d'offrir un découplage entre la tension totale des condensateurs des sous-modules et la tension du réseau d'alimentation électrique continu. Néanmoins, une simple variation de puissance peut mener à une grande variation de tension du réseau d'alimentation électrique continu.

On connait des convertisseurs MMC dont le contrôle n'est pas basé sur l'énergie (« *Non Energy Based Control»* en langue anglaise). Dans ces convertisseurs, lorsqu'un éventuel écart de tension apparait entre la tension des condensateurs des demi-bras et la tension du réseau d'alimentation électrique continu, la puissance du réseau d'alimentation électrique continu entrante varie automatiquement pour corriger ledit écart de tension. Ce contrôle s'effectue sans régulateur supplémentaire puisque les échanges d'énergies avec les condensateurs des demi-bras suivent les variations de tension sur le réseau d'alimentation électrique continu.

Toutefois, toutes les variables de ce type de convertisseurs ne sont pas contrôlées, ce qui se traduit par un manque de robustesse du convertisseur.

Il est également connu des convertisseurs dont le contrôle est basé sur l'énergie. On connait notamment le document intitulé « Control of DC bus voltage with a Modular Multilevel Converter» (Samimi et al., conférence PowerTech, 2015), qui présente un convertisseur modulaire multi-niveaux comportant un système de contrôle des transferts de puissance au niveau de la partie alternative, des transferts de puissance au niveau de la partie continue et de l'énergie interne du convertisseur. Un tel convertisseur utilise un contrôle basé sur l'énergie (« *Energy Based Control»* en langue anglaise) : un contrôle des variables de courant des réseaux d'alimentation électrique continu et alternatif permet de contrôler les puissances de ces deux réseaux respectifs. Une différence entre les puissances des réseaux d'alimentation électrique continu et alternatif entraine une diminution ou une augmentation de l'énergie stockée dans les condensateurs des sous-modules. Ce type de convertisseurs nuit toutefois au découplage entre les tensions aux bornes des condensateurs des sous-modules et la tension du réseau d'alimentation électrique continu. De plus, il ne permet pas de s'adapter efficacement et en temps réel aux fluctuations de tensions sur le réseau d'alimentation électrique continu.

Ces convertisseurs connus ne sont pas suffisamment robustes, en particulier en ce qui concerne la contribution à la stabilité du réseau d'alimentation électrique continu. Ces solutions existantes ne permettent pas d'exploiter pleinement les capacités des convertisseurs MMC en termes de contrôle de l'énergie interne du convertisseur conjointement au contrôle de la stabilité du réseau DC.

Il est également connu des convertisseurs tels que celui décrit dans le document FR1557501. Le comportement de ce type de convertisseur modulaire multi-niveaux est équivalent à celui d'un condensateur virtuel disposé en parallèle du réseau d'alimentation électrique continu. En régulant l'énergie interne de ce convertisseur il est possible de faire virtuellement varier la capacité du condensateur virtuel. L'intérêt est de pouvoir agir sur le réseau d'alimentation électrique continu, et de contribuer à sa stabilité, tout en maintenant le découplage entre la tension totale des condensateurs des sous-modules et la tension dudit réseau.

L'inconvénient de la solution du document FR1557501 est que ce type de convertisseur implique de nombreuses étapes de calcul utilisant un nombre important de variables intermédiaires. Aussi, la régulation de l'énergie interne se révèle longue et complexe à réaliser et coûteuse en termes de ressources. En outre, en présence d'une perturbation sur le réseau d'alimentation électrique continu, il devient particulièrement difficile, voire impossible de contrôler l'énergie interne d'un tel convertisseur selon l'art antérieur.

Il est également connu des convertisseurs tels que décrit dans le document WO 2017/021642 A1.

Objet et résumé de l'invention

Un but de la présente invention est de proposer un convertisseur modulaire multi-niveaux (MMC) muni d'un module de contrôle du convertisseur qui permette la régulation facilitée de l'énergie interne du convertisseur. Un autre but est de fournir un convertisseur plus robuste, permettant de réguler efficacement l'énergie interne du convertisseur malgré la présence d'une perturbation sur le réseau d'alimentation électrique continu.

Pour ce faire, l'invention porte sur un convertisseur de tension modulaire multi-niveaux tel que défini dans la revendication 1, permettant de convertir une tension alternative en une tension continue et inversement, comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande propre à chaque sous-module et chaque sous-module comprenant un condensateur connectable en série dans le demi-bras lorsque l'organe de commande du sous-module est dans un état commandé, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé correspondant à une capacité totale du demi-bras.

Le convertisseur comprend en outre un module de contrôle du convertisseur comprenant un calculateur d'une consigne de commande interne du convertisseur par application d'une fonction ayant un paramètre d'entrée réglable.

Selon une caractéristique générale du convertisseur, le module de contrôle du convertisseur comprend en outre un module de gestion de l'énergie configuré pour délivrer une consigne de puissance de fonctionnement en fonction de la tension aux bornes de chaque condensateur modélisé, la consigne de puissance de fonctionnement étant utilisée pour déterminer une consigne de puissance à transmettre au réseau d'alimentation électrique alternatif, le module de contrôle étant configuré pour réguler la tension au point de connexion du convertisseur au réseau d'alimentation électrique continu et la tension aux bornes de chaque condensateur modélisé en fonction de la consigne de commande interne et de la consigne de puissance à transmettre au réseau d'alimentation électrique alternatif.

Le paramètre d'entrée réglable du calculateur peut être réglé à tout moment durant les opérations de régulation de l'énergie interne et de manière aisée par l'utilisateur. La consigne de commande interne peut être associée à différents types de grandeurs. De manière non limitative, la consigne de commande interne peut être une consigne de puissance interne ou encore une consigne de courant. La consigne de commande interne calculée par le calculateur dépend du paramètre d'entrée. Aussi, il est possible pour l'utilisateur d'agir directement sur la consigne de commande interne du convertisseur permettant ainsi de réguler la tension au point de connexion du convertisseur au réseau d'alimentation électrique continu et la tension aux bornes de chaque condensateur modélisé.

L'utilisateur peut en outre ajuster le paramètre d'entrée en fonction de perturbations sur le réseau d'alimentation électrique continu afin de le stabiliser.

De manière non limitative, le convertisseur modulaire multi-niveaux, dont le module de contrôle est muni d'un tel calculateur, a un comportement équivalent à celui d'un condensateur virtuel disposé en parallèle du réseau d'alimentation électrique continu. En réglant le paramètre d'entrée réglable du calculateur, on fait virtuellement varier la capacité du condensateur virtuel. L'intérêt est de pouvoir agir sur le réseau d'alimentation électrique continu tout en maintenant le découplage entre la tension totale des condensateurs des sous-modules et la tension du réseau d'alimentation électrique continu.

Contrairement à un condensateur réellement placé en parallèle du réseau d'alimentation électrique continu, le condensateur virtuel n'a pas de coût et ne peut pas être dégradé. En particulier, le condensateur virtuel réglable selon l'invention peut prendre des valeurs de capacités très élevées, ce qui n'est pas matériellement possible pour un condensateur réel.

De préférence, les sous-modules sont commandés aux moyens de deux transistors bipolaires à grille isolée (IGBT) permettant de placer ou non en série le condensateur dudit sous-module dans le demi-bras associé suivant que l'on souhaite commander le sous-module dans l'état commandé « *on* » ou dans l'état non-commandé « *off*».

Chaque demi-bras peut être modélisé par une source de tension modélisée associée en parallèle à un condensateur modélisé de capacité $C_{tot}$. On notera $v_{c\Sigma}$ la somme des tensions des condensateurs des sous-modules d'un demi-bras, de sorte que la tension aux bornes du condensateur modélisé associé en parallèle à la source de tension modélisée vaut $v_{c\Sigma}$.

De préférence, le rapport cyclique $\alpha$, associé à la source de tension modélisée, est calculé d'après l'expression :

$$\alpha = \frac{n}{N}$$

où $n$ est le nombre de sous-modules connectés à l'état « on » dans le demi-bras associé et $N$ est le nombre de sous-modules dans le demi-bras.

Par ailleurs, grâce à l'invention, le module de gestion de l'énergie permet de fournir une consigne de puissance à transmettre au réseau d'alimentation électrique alternatif $P_{ac}^*$ et donc d'asservir la tension aux bornes de chaque condensateur modélisé, à partir de cette consigne. Aussi, ce module contribue à la régulation de l'énergie interne du convertisseur en intervenant sur la partie alternative dudit convertisseur. Un intérêt du module de gestion de l'énergie est de s'affranchir d'une perturbation sur le réseau d'alimentation électrique continu ou en partie continue du convertisseur. En effet, le module de gestion de l'énergie permet la régulation de l'énergie en partie alternative du convertisseur, indépendamment des perturbations en partie continue. La robustesse du convertisseur est donc améliorée.

En régulant conjointement la tension au point de connexion du convertisseur au réseau d'alimentation électrique continu et la tension aux bornes de chaque condensateur modélisé on peut en outre agir sur la stabilité du réseau d'alimentation électrique continu. Ceci permet de contenir d'éventuelles perturbations en puissance apparaissant soudainement sur le réseau d'alimentation électrique continu et qui pourraient entrainer d'importantes variations de tension sur ledit réseau.

De manière avantageuse, le calculateur est configuré pour calculer la consigne de commande interne par application d'une fonction dérivée et d'une fonction de filtrage. Un intérêt est que l'application d'une telle fonction de filtrage consomme peu de ressources de calculs. En outre, le filtrage permet de s'affranchir des bruits de mesure pouvant endommager le convertisseur lors de sa commande.

De préférence, la fonction de filtrage est un filtre du premier ordre, permettant de filtrer d'autant plus efficacement les bruits de mesure.

Avantageusement, le paramètre d'entrée réglable est un coefficient d'inertie virtuelle réglable $k_{VC}$. Aussi, modifier ce paramètre $k_{VC}$ revient à modifier virtuellement la capacité du condensateur virtuel et ainsi contribuer à la stabilité du réseau d'alimentation électrique continu. Un avantage est de proposer un degré de liberté supplémentaire dans le contrôle de l'énergie interne du convertisseur MMC. La capacité du condensateur virtuel peut notamment prendre des valeurs très élevées, sans contraintes matérielles supplémentaires.

Selon une première variante, la consigne de commande interne est une consigne de puissance interne $P_W^*$. Dans cette configuration le convertisseur est contrôlé en termes de puissance. Un intérêt est que le calculateur fournit directement une consigne de puissance, ce qui permet notamment de s'affranchir d'une étape intermédiaire de calcul d'une consigne d'énergie interne du convertisseur, comme c'est le cas dans les documents de l'art antérieur. La détermination de cette consigne de puissance interne est donc facilitée, ainsi que la régulation de l'énergie interne.

De manière particulièrement avantageuse, le calculateur est configuré pour calculer la consigne de puissance interne $P_W^*$ du convertisseur selon la fonction:

$$P_W^* = \frac{1}{2} C_{eq} k_{VC} \times (v_{dc}^2 \times \frac{s}{1+\tau s})$$

où $C_{eq} = 6C_{tot}$ et $C_{tot}$ est la capacité totale dans un demi-bras du condensateur modélisé, $v_{dc}$ est la tension au point de connexion du convertisseur au réseau d'alimentation électrique continu et $\tau$ est une constante de temps. Le s au numérateur représente la fonction dérivée et la fonction de filtrage consiste en : $\frac{1}{1+\tau s}$.

On comprend que la capacité $C_{VC}$ du condensateur virtuel s'exprime :

$$C_{VC} = 6C_{tot}k_{VC}$$

Préférentiellement, la consigne de puissance interne $P_W^*$ est utilisée pour déterminer une consigne de puissance $P_{dc}^*$ à transmettre au réseau d'alimentation électrique continu. Par détermination de cette puissance, notée $P_{dc}^*$, on comprend que le calculateur contribue à la régulation de la puissance interne, et donc de l'énergie interne du convertisseur en intervenant sur la partie continue dudit convertisseur. Un intérêt est qu'en cas de perturbations sur le réseau d'alimentation électrique alternatif ou en partie alternative du convertisseur, le calculateur permet toujours de réguler la tension au point de connexion du convertisseur au réseau d'alimentation électrique continu et la tension aux bornes de chaque condensateur modélisé en fournissant la consigne de puissance interne en partie continue du convertisseur. En conséquence, l'effet de capacité virtuelle décrit précédemment, permettant de stabiliser le réseau d'alimentation continu, est maintenu. La robustesse du convertisseur est donc améliorée.

Selon une seconde variante, la consigne de commande interne est une consigne de courant interne $I_W^*$. Dans cette configuration le convertisseur est contrôlé en termes de courant.

De manière avantageuse, le calculateur est configuré pour calculer la consigne de courant interne $I_W^*$ selon la fonction:

$$I_W^* = C_{eq} k_{VC} \times \left( v_{dc} \times \frac{s}{1 + \tau s} \right)$$

où $C_{eq} = 6C_{tot}$ et $C_{tot}$ est la capacité totale dans un demi bras du condensateur modélisé, $v_{dc}$ est la tension au point de connexion du convertisseur au réseau d'alimentation électrique continu et $\tau$ est une constante de temps.

Préférentiellement, la consigne de courant interne $I_W^*$ est utilisée pour déterminer une consigne de courant $I_{dc}^*$ à transmettre au réseau d'alimentation électrique continu. Par détermination de cette consigne de courant $I_{dc}^*$, on comprend que le calculateur contribue à la régulation du courant, et donc de l'énergie interne du convertisseur en intervenant sur la partie continue dudit convertisseur.

En conséquence, l'effet de capacité virtuelle décrit précédemment, permettant de stabiliser le réseau d'alimentation continu, est maintenu, malgré d'éventuelles perturbations sur le réseau d'alimentation électrique alternatif ou en partie alternative du convertisseur. La robustesse du convertisseur est donc améliorée.

Dans un mode de réalisation particulier, le module de gestion de l'énergie reçoit en entrée le résultat d'une comparaison entre une consigne de tension aux bornes de chaque condensateur modélisé, élevée au carré, et une moyenne du carré des tensions aux bornes des condensateurs modélisés. Le module de gestion de l'énergie permet donc d'asservir la tension aux bornes de chaque condensateur modélisé, élevée au carré, à partir d'une valeur de consigne de cette tension. En particulier, la consigne de tension aux bornes de chaque condensateur modélisé $v_{c\Sigma}^*$ s'exprime :

$$v_{c\Sigma}^{2*} = \frac{2W_\Sigma^*}{6C_{tot}}$$

où $W_\Sigma^*$ est une consigne d'énergie interne choisie arbitrairement.

De préférence, le module de contrôle est configuré pour effectuer un changement de variable afin de contrôler des variables intermédiaires de courant $i_{diff}$ et $i_{gd}$ et de tension $v_{diff}$ et $v_{gd}$, où $i_{diff}$ et $v_{diff}$ sont associées au réseau d'alimentation électrique continu et $i_{gd}$ et $v_{gd}$ sont associées au réseau d'alimentation électrique alternatif.

De manière non limitative, dans le cas d'un convertisseur d'énergie continue en énergie alternative, ces variables permettent d'exprimer la variation d'énergie interne du convertisseur sous la forme :

$$\frac{dW_\Sigma}{dt} = \sum_{i=1}^{3} 2i_{diff_i} v_{diff} - i_{gd} v_{gd}$$

**Cette expression** traduit notamment la décomposition du convertisseur MMC en une partie imaginaire continue en entrée, reliée au réseau continu et associée au terme $\sum_{i=1}^{3} 2i_{diff_i} v_{diff}$ qui correspond à la puissance de la partie continue et une partie imaginaire alternative en sortie, reliée au réseau alternatif et associée au terme $i_{gd} v_{gd}$ qui correspond à la puissance de la partie alternative.

Avantageusement, le module de contrôle comporte un régulateur du courant $i_{gd}$ ayant en entrée une consigne $i_{gd}^*$ correspondant au courant $i_{gd}$. Le régulateur asservit le courant $i_{gd}$ en le faisant tendre vers sa consigne $i_{gd}^*$. La régulation de la variable $i_{gd}$ revient à réguler les transferts de puissance alternative en entrée ou en sortie suivant la configuration du convertisseur.

De manière avantageuse, le module de contrôle comporte un régulateur du courant $i_{diff}$ ayant en entrée une consigne $i_{diff}^*$ correspondant au courant $i_{diff}$. Le régulateur asservit le courant $i_{diff}$ en le faisant tendre vers sa consigne $i_{diff}^*$. La régulation de la variable $i_{diff}$ revient à réguler les transferts de puissance continue en entrée ou en sortie suivant la configuration du convertisseur.

De manière non limitative, les variables $i_{gd}$ et $i_{diff}$ peuvent être contrôlées indépendamment. On comprend alors que réguler $i_{diff}$ et $i_{gd}$ permet de réguler les transferts de puissances respectivement entrante et sortante, et ainsi contrôler l'énergie interne du convertisseur stockée dans les condensateurs des sous-modules.

Le module de contrôle comporte un régulateur de la tension au point de connexion du convertisseur au réseau d'alimentation électrique continu configuré pour déterminer une consigne de puissance pour la régulation de la tension continue dudit convertisseur en fonction d'une consigne de tension au point de connexion du convertisseur au réseau d'alimentation électrique continu et d'une valeur de tension au point de connexion du convertisseur au réseau d'alimentation électrique continu prélevée sur ledit réseau d'alimentation électrique continu. Un intérêt de ce régulateur est de pouvoir asservir la tension au point de connexion du convertisseur au réseau d'alimentation électrique continu $v_{dc}$ en faisant tendre sa valeur vers la consigne de tension au point de connexion du convertisseur au réseau d'alimentation électrique continu $v_{dc}^*$.

L'invention porte également sur un procédé de contrôle d'un convertisseur de tension modulaire multi-niveaux tel que défini dans la revendication 14, le convertisseur permettant de convertir une tension alternative en une tension continue et inversement, et comportant une partie dite continue destinée à être reliée à un réseau d'alimentation électrique continu et une partie dite alternative destinée à être reliée à un réseau d'alimentation électrique alternatif, le convertisseur comportant une pluralité de bras, chaque bras comportant un demi-bras supérieur et un demi-bras inférieur, chaque demi-bras comprenant une pluralité de sous-modules commandables individuellement par un organe de commande du sous-module et comprenant un condensateur connecté en série dans le demi-bras dans un état commandé de l'organe de commande du sous-module, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé correspondant à une capacité totale du demi-bras, le procédé comprenant en outre un calcul d'une consigne de puissance interne du convertisseur par application d'une fonction ayant un paramètre d'entrée réglable, le procédé comprenant :

- une étape de détermination d'une consigne de puissance de fonctionnement en fonction de la tension aux bornes de chaque condensateur modélisé ;
- une étape de détermination d'une consigne de puissance à transmettre au réseau d'alimentation électrique alternatif à partir de la consigne de puissance de fonctionnement ; et
- une étape de régulation de la tension au point de connexion du convertisseur au réseau d'alimentation électrique continu et de la tension aux bornes de chaque condensateur modélisé en fonction de ladite consigne de puissance interne et de ladite consigne de puissance à transmettre au réseau d'alimentation électrique alternatif.

Avantageusement, le paramètre d'entrée réglable est un coefficient d'inertie virtuelle réglable $k_{VC}$.

Brève description des dessins

L'invention sera mieux comprise à la lecture de la description qui suit de modes de réalisation de l'invention donnés à titre d'exemples non limitatifs, en référence aux dessins annexés, sur lesquels :

- la figure **1,** déjà décrite, illustre un convertisseur modulaire multi-niveaux à trois phases selon la technique antérieure ;
- la figure **2,** déjà décrite, illustre un sous-module d'un convertisseur modulaire multi-niveaux selon la technique antérieure ;
- la figure **3,** déjà décrite, illustre un circuit équivalent à un demi-bras d'un convertisseur MMC selon la technique antérieure ;
- la figure **4,** déjà décrite, montre une configuration équivalente d'un convertisseur modulaire multi-niveaux selon la technique antérieure;
- la figure **5** illustre une représentation équivalente et schématique d'un convertisseur modulaire multi-niveaux selon l'invention ;
- la figure **6** illustre un premier mode de réalisation d'un convertisseur modulaire multi-niveaux muni d'un module de contrôle selon l'invention ;
- la figure **7** illustre un calculateur du convertisseur de la figure **6** ;
- la figure **8** illustre l'évolution de la puissance des réseaux d'alimentation électrique continu et alternatif en réponse à une perturbation, pour un convertisseur de l'art antérieur ;
- la figure **9** illustre l'évolution de la puissance des réseaux d'alimentation électrique continu et alternatif en réponse à une perturbation, pour un convertisseur selon l'invention ;
- la figure **10** illustre l'évolution de l'énergie interne en réponse à ladite perturbation, pour un convertisseur de l'art antérieur ;
- la figure **11** illustre l'évolution de l'énergie interne en réponse à ladite perturbation, pour un convertisseur selon l'invention ;
- la figure **12** illustre un second mode de réalisation d'un convertisseur modulaire multi-niveaux muni d'un module de contrôle selon l'invention ; et
- la figure **13** illustre un calculateur du convertisseur de la figure **12.**

Description détaillée de l'invention

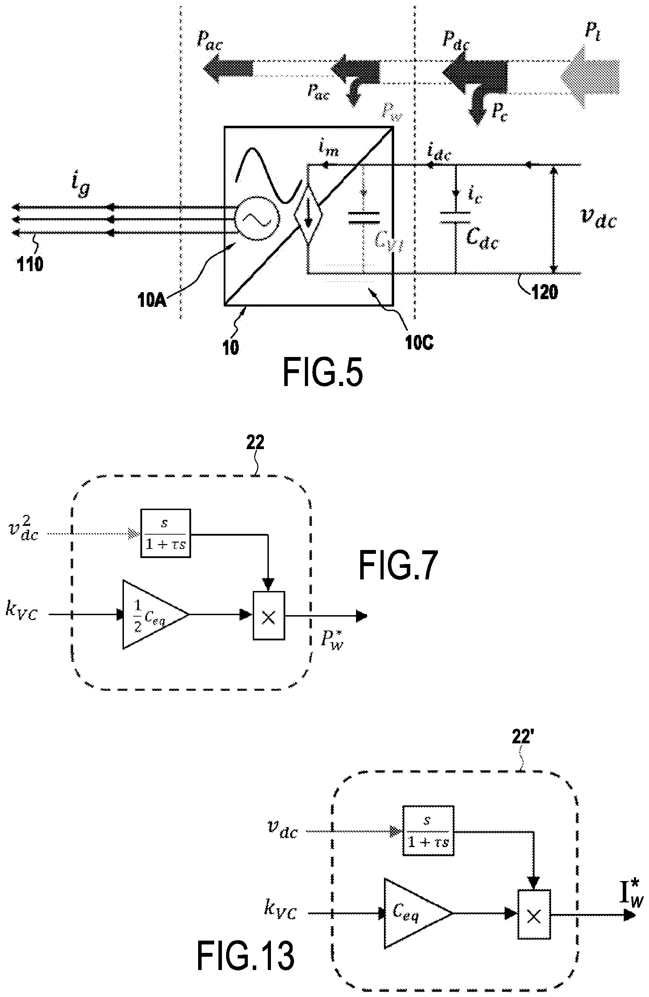

L'invention porte sur un convertisseur modulaire multi-niveaux muni d'un module de contrôle, dont un circuit du comportement équivalent est illustré en figure **5.** Sur cette figure, de manière non limitative, on a représenté un convertisseur MMC **10** d'énergie continue en énergie alternative. Dans cet exemple, on remarque que ce convertisseur **10** comporte une partie alternative **10A,** reliée à un réseau d'alimentation électrique alternatif **110,** en partie gauche du schéma. En partie droite du schéma, on voit que le convertisseur **10** comporte une partie continue **10C** reliée à un réseau d'alimentation électrique continu **120.**

On peut voir qu'un condensateur virtuel $C_{VI}$ ayant capacité réglable (par abus de langage et pour des raisons de simplicité, on utilisera la même notation pour désigner le condensateur et sa capacité) est associé en parallèle avec le réseau d'alimentation électrique continu **120.** Par virtuel, on entend que ce condensateur n'est pas physiquement implanté dans le convertisseur **10,** qui ne comporte que des condensateurs de sous-modules. Par contre, le module de contrôle selon l'invention permet d'obtenir un fonctionnement de convertisseur analogue à celui d'un convertisseur équipé de ce condensateur virtuel : en réglant un coefficient d'inertie virtuelle $k_{VC}$, qui n'apparaît pas sur la figure **5,** et qui est un paramètre réglable, on améliore la stabilité du réseau d'alimentation électrique continu **120** et le comportement du convertisseur est analogue à celui d'un convertisseur dans lequel un condensateur virtuel $C_{VI}$ de capacité réglable est placé en parallèle du réseau d'alimentation électrique continu **120.**

Le schéma de la figure **5** illustre également les transferts de puissances entre le convertisseur **10** et les réseaux d'alimentation électrique continu et alternatif **120 et 110.** Ainsi, $P_l$ est la puissance provenant d'autres stations du réseau d'alimentation électrique continu et symbolise une soudaine perturbation en puissance sur le réseau continu, $P_{dc}$ est la puissance extraite du réseau d'alimentation électrique continu **120,** $P_{ac}$ est la puissance transmise au réseau d'alimentation électrique alternatif **110,** $P_C$ est la puissance absorbée par la capacité $C_{dc}$ du réseau d'alimentation électrique continu **120,** $P_W$ peut être considérée comme la puissance absorbée par le condensateur virtuel $C_{VI}$. En outre, $v_{dc}$ est la tension au point de connexion du convertisseur au réseau d'alimentation électrique continu. $i_g$ est le courant du réseau d'alimentation électrique alternatif et $i_{dc}$ est le courant du réseau d'alimentation électrique continu.

Dans le convertisseur MMC **10** selon l'invention, et contrairement à un convertisseur MMC de l'art antérieur, un surplus de la puissance du réseau d'alimentation électrique continu **120,** notée $P_W$, est absorbée par le condensateur virtuel $C_{VI}$ et permet au convertisseur de stocker de l'énergie interne $W_{\Sigma}$ dans les condensateurs des sous-modules.

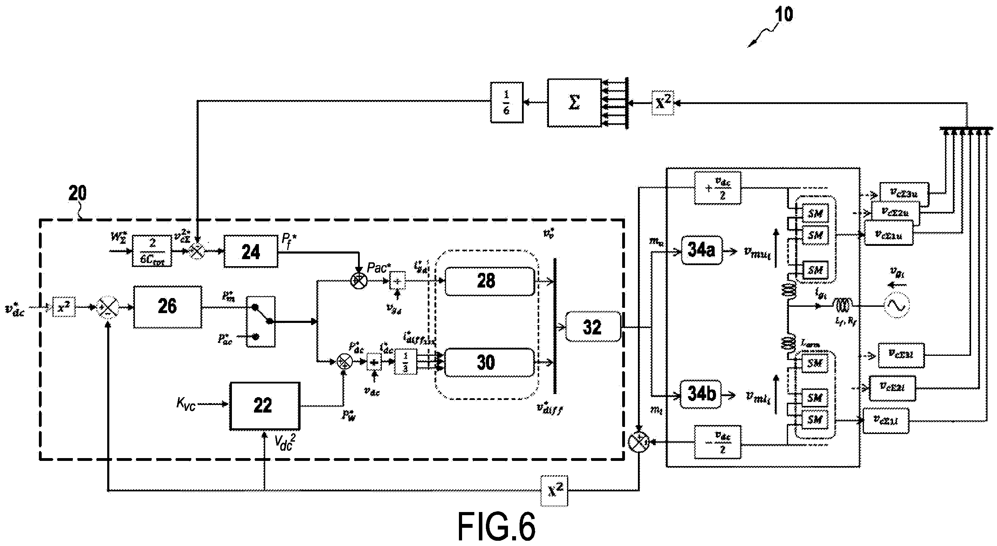

L'exemple de la figure **6** illustre un premier mode de réalisation d'un convertisseur modulaire multi-niveaux **10** muni d'un module de contrôle **20** selon l'invention. Dans cet exemple, le convertisseur est contrôlé en termes de puissance. Le convertisseur MMC **10** est configuré pour réguler, par asservissement en boucle fermée, la tension $v_{dc}$ au point de connexion du convertisseur au réseau d'alimentation électrique continu **120** et la tension $v_{c\Sigma}$ aux bornes de chaque condensateur modélisé.

Le module de contrôle **20** comporte un calculateur **22** configuré pour calculer une consigne de puissance interne $P_W^*$ pour les condensateurs des sous-modules des demi-bras. Cette consigne de puissance interne $P_W^*$ est calculée à partir d'un coefficient d'inertie virtuelle réglable $k_{VC}$, en entrée du calculateur **22,** et d'une valeur nominale de la tension $v_{dc}$ au point de connexion du convertisseur au réseau d'alimentation électrique continu **120,** élevée au carré.

Un exemple de calculateur **22** d'une consigne de puissance $P_W^*$ est représenté sur la figure **7.** Sur cette figure, on constate que ladite consigne de puissance interne $P_W^*$ est déterminée d'après la formule :

$$P_W^* = \frac{1}{2} C_{eq} k_{VC} \times (v_{dc}^2 \times \frac{s}{1 + \tau s})$$

où $C_{eq} = 6C_{tot}$ et $C_{tot}$ est la capacité totale dans un demi bras du condensateur modélisé, $v_{dc}$ est la tension au point de connexion du convertisseur au réseau d'alimentation électrique continu et $\tau$ est une constante de temps. Le s au numérateur représente la fonction dérivée et la fonction de filtrage consiste en : $\frac{1}{1+\tau s}$.

En particulier, le module de contrôle **20** selon l'invention permet de s'affranchir d'une étape intermédiaire de détermination d'une consigne d'énergie interne mise en œuvre dans l'art antérieur.

Ladite consigne de puissance interne $P_W^*$ est alors utilisée pour déterminer une consigne de puissance $P_{dc}^*$ à transmettre au réseau d'alimentation électrique continu. On comprend que le calculateur **22** contribue à la régulation de la puissance interne, et donc de l'énergie interne du convertisseur **10** en intervenant sur la partie continue **10C** dudit convertisseur. Un intérêt est qu'en cas de perturbation sur le réseau d'alimentation électrique alternatif **110** ou en partie alternative **10A** du convertisseur, le calculateur **22** permet toujours de réguler la tension $v_{dc}$ au point de connexion du convertisseur au réseau d'alimentation électrique continu et la tension $v_{c\Sigma}$ aux bornes de chaque condensateur modélisé en fournissant la consigne de puissance à transmettre au réseau d'alimentation électrique continu $P_{dc}^*$ en partie continue du convertisseur.

Par ailleurs, le module de contrôle **20** du convertisseur **10** comprend également un module **24** de gestion de l'énergie configuré pour délivrer une consigne de puissance de fonctionnement $P_f^*$. Le module **24** de gestion de l'énergie reçoit en entrée une comparaison entre une consigne de tension $v_{c\Sigma}^*$ aux bornes de chaque condensateur modélisé, élevée au carré, et une moyenne du carré des tensions aux bornes des condensateurs modélisés, également élevée au carré. Sans sortir du cadre de l'invention, la moyenne peut être calculée de différentes manières. Dans l'exemple non limitatif illustré en figure 6, la moyenne est calculée comme étant la somme des carrés des tensions des condensateurs modélisés dans chaque demi-bras, divisée par six (le convertisseur comportant six demi-bras).

La consigne de tension aux bornes de chaque condensateur modélisé $v_{c\Sigma}^*$ s'exprime :

$$v_{c\Sigma}^{2*} = \frac{2W_\Sigma^*}{6C_{tot}}$$

Ladite consigne de tension $v_{c\Sigma}^*$ aux bornes de chaque condensateur modélisé est donc obtenue à partir d'une consigne d'énergie interne $W_\Sigma^*$ du convertisseur, fixée arbitrairement.

Ladite consigne de puissance de fonctionnement $P_f^*$ est alors utilisée pour déterminer une consigne de puissance $P_{ac}^*$ à transmettre au réseau d'alimentation électrique alternatif **110**. On comprend que le module **24** permet une gestion de l'énergie interne du convertisseur **10** en intervenant sur la partie alternative **10A** dudit convertisseur. Un intérêt est que même en présence d'une perturbation sur le réseau d'alimentation électrique continu **120** ou en partie continue **10C** du convertisseur **10**, le module **24** de gestion de l'énergie permet de réguler efficacement la tension $v_{dc}$ au point de connexion du convertisseur au réseau d'alimentation électrique continu **120** et la tension $v_{c\Sigma}$ aux bornes de chaque condensateur modélisé en fournissant la consigne de puissance à transmettre au réseau d'alimentation électrique alternatif $P_{ac}^*$ en partie alternative du convertisseur **10**.

Sur la figure **6,** on remarque également que le module de contrôle **20** comprend un régulateur **26** de la tension au point de connexion du convertisseur au réseau d'alimentation électrique continu **120,** ayant en entrée le résultat d'une comparaison entre une consigne de tension $v_{dc}^*$ au point de connexion du convertisseur **10** au réseau d'alimentation électrique continu **120,** élevée au carré, et une valeur $v_{dc}$ prélevée sur le réseau d'alimentation électrique continu, également élevée au carré. Le régulateur **26** de la tension au point de connexion du convertisseur au réseau d'alimentation électrique continu **120** délivre une consigne de puissance $P_m^*$ pour la régulation de la tension continue dudit convertisseur **10**. Ladite consigne de puissance $P_m^*$ pour la régulation de la tension continue dudit convertisseur est alors comparée à la consigne de puissance de fonctionnement $P_f^*$ afin de déterminer la consigne de puissance $P_{ac}^*$ à transmettre au réseau d'alimentation électrique alternatif **110**.

De même, la consigne de puissance interne $P_W^*$ est comparée à la consigne de puissance $P_m^*$ pour la régulation de la tension continue dudit convertisseur afin de déterminer la consigne de puissance $P_{dc}^*$ à transmettre au réseau d'alimentation électrique continu.

En outre, le module de contrôle **20** comporte un régulateur **28** du courant alternatif $i_{gd}$ ayant en entrée une consigne $i_{gd}^*$, et un régulateur **30** du courant $i_{diff}$ ayant en entrée une consigne $i_{diff}^*$.

D'après la figure **3,** on sait qu'il est possible de modéliser les sous-modules d'un demi-bras par une source de tension modélisée associée en parallèle à un condensateur modélisé de sorte que les sources de tensions modélisées ont à leurs bornes une tension $v_{mxi}$ (avec x indiquant si le demi-bras est supérieur ou inférieur et i indiquant le bras). Les régulateurs de courant **28** et **30** délivrent des consignes de tension $v_{diff}$ et $v_v^*$ utilisés suite à un changement de variable, par un organe de modulation **32** et deux organes d'équilibrage **34a et 34b** au moyen d'un algorithme de contrôle (« **BCA : Balancing Control Algorithm** » en langue anglaise), pour réguler les tensions $v_{mxi}$ aux bornes des sources de tensions modélisées. Ceci permet de commander ou non les sous-modules des demi-bras. On contrôle ainsi la tension aux bornes des condensateurs modélisés $v_{c\Sigma xi}$ ainsi que la tension au point de connexion du convertisseur au réseau d'alimentation électrique continu $v_{dc}$.

En faisant varier le coefficient d'inertie virtuelle $k_{VC}$ en entrée du calculateur on peut donc influer directement sur la tension du réseau d'alimentation électrique continu $v_{dc}$ et sur l'inertie de ce réseau d'alimentation électrique continu.

Le schéma de la figure **6** illustre un contrôle des puissances actives pour le contrôle du convertisseur. De manière non limitative, un contrôle des puissances réactives peut être prévu, en parallèle du contrôle des puissances actives, indépendamment de l'effet de « condensateur virtuel ».

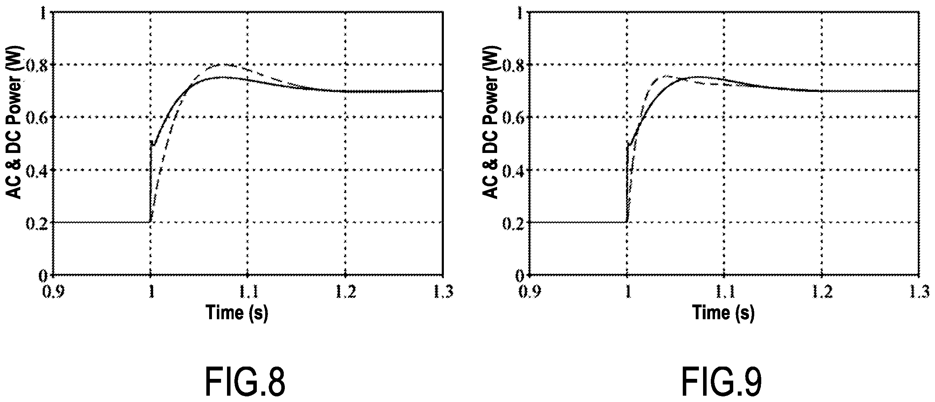

Les figures **8** à **11** illustrent les résultats d'une simulation du comportement d'un convertisseur modulaire multi-niveaux **10** muni d'un module de contrôle **20** selon l'invention et en particulier une simulation par contrôle de la puissance. Dans cette simulation, on a créé un système de test dans lequel la partie continue du convertisseur est connectée à une source de puissance continue idéale, simulant un réseau d'alimentation électrique continu **120,** tandis que la partie alternative du convertisseur est reliée à une source de puissance alternative, simulant un réseau d'alimentation électrique alternatif **110**. On impose alors un échelon de puissance sur le réseau continu simulé, simulant une perturbation sur ledit réseau d'alimentation électrique continu.

La figure **8** représente en pointillés l'évolution de la puissance $P_{ac}$ du réseau d'alimentation électrique alternatif et, en traits pleins, l'évolution de la puissance $P_{dc}$ du réseau d'alimentation électrique continu en réponse à la perturbation imposée, pour un convertisseur de l'art antérieur. Cette évolution de la puissance $P_{dc}$ du réseau d'alimentation électrique continu traduit l'effet de « capacité virtuelle », le convertisseur ayant un comportement équivalent à celui d'un condensateur virtuel disposé en parallèle du réseau d'alimentation électrique continu. La figure **9** illustre les mêmes grandeurs pour un convertisseur selon l'invention.

On constate sur les figures **8** et **9** qu'en présence d'une perturbation sur le réseau d'alimentation électrique continu, l'évolution de la puissance $P_{dc}$ du réseau d'alimentation électrique continu est identique pour le convertisseur de l'art et pour le convertisseur selon l'invention. Le convertisseur selon l'invention permet donc de réaliser un effet « capacité virtuelle » et se comporte comme un condensateur virtuel disposé en parallèle du réseau d'alimentation électrique continu.

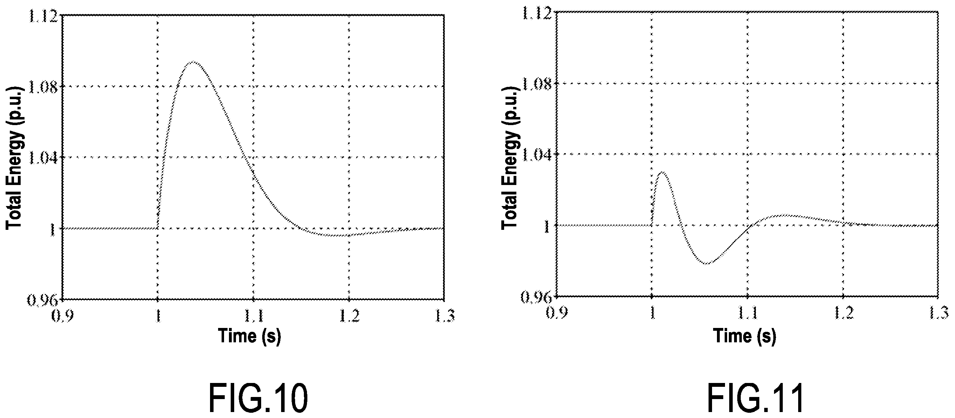

La figure **10** illustre l'évolution de l'énergie interne stockée dans les condensateurs des sous-modules d'un convertisseur de l'art antérieur, en réponse à la perturbation imposée.

La figure **11** illustre l'évolution de l'énergie interne stockée dans les condensateurs des sous-modules d'un convertisseur selon l'invention, en réponse à la perturbation imposée.

On constate que, grâce au convertisseur selon l'invention, l'énergie est mieux régulée et qu'elle n'augmente pas de manière soudaine et brutale, comme dans l'art antérieur. En particulier, grâce à l'invention, l'énergie interne du convertisseur tend plus rapidement vers sa valeur nominale. L'énergie interne du convertisseur est donc mieux maitrisée grâce au module de contrôle selon l'invention, et notamment grâce au module de gestion de l'énergie. En effet, ce dernier intervient en partie alternative du convertisseur et permet de contrôler efficacement l'énergie interne du convertisseur malgré une perturbation sur le réseau d'alimentation électrique continu.

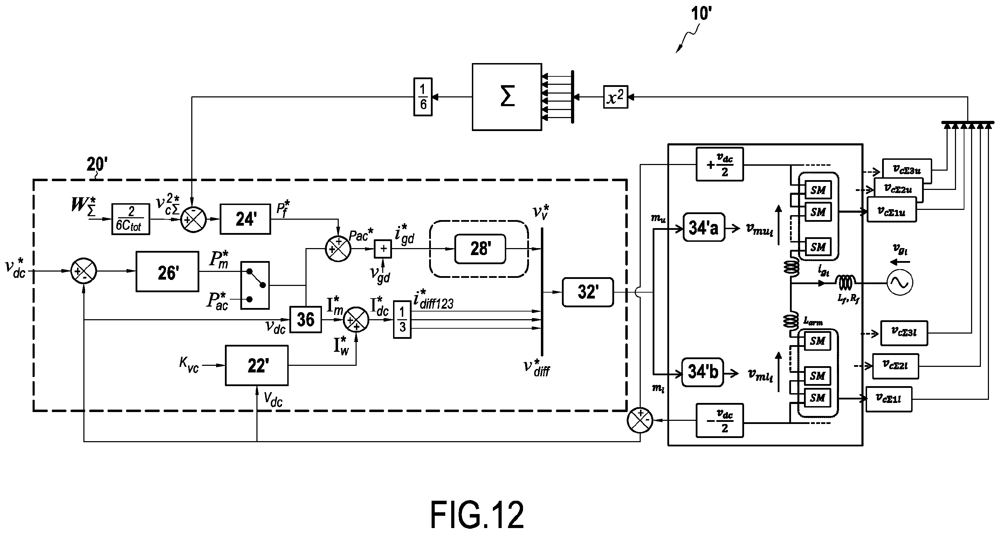

La figure **12** illustre un second mode de réalisation d'un convertisseur **10'** selon l'invention, muni d'un module de contrôle **20'** selon l'invention. Dans cet exemple, le convertisseur est contrôlé en termes de courant. Comme dans l'exemple de la figure **6**, le module de contrôle comporte un module **24'** de gestion de l'énergie configuré pour délivrer une consigne de puissance de fonctionnement $P_f^*$. Il comporte également un régulateur **28'** du courant alternatif $i_{gd}$, un organe de modulation **32'** et deux organes d'équilibrage **34a'** et **34b'**.

Dans ce mode de réalisation, le module de contrôle **20'** comporte un calculateur **22'** configuré pour calculer une consigne de courant interne $I_W^*$ pour les condensateurs des sous-modules des demi-bras.

Un tel calculateur est illustré en figure **13**. Comme on le constate sur cette figure, la consigne de courant interne $I_W^*$ est calculée à partir d'un coefficient d'inertie virtuelle réglable $k_{VC}$, en entrée du calculateur **22'**, et d'une valeur nominale de la tension $v_{dc}$ au point de connexion du convertisseur au réseau d'alimentation électrique continu **120**. Ce calculateur **22'** met également en œuvre une fonction dérivée et un filtre du premier ordre.

Le module de contrôle **20'** comporte en outre un régulateur **26'** de la tension au point de connexion du convertisseur au réseau d'alimentation électrique continu **120**, recevant en entrée le résultat d'une comparaison entre une consigne de tension $v_{dc}^*$ au point de connexion du convertisseur **10** au réseau d'alimentation électrique continu **120** et une valeur $v_{dc}$ prélevée sur le réseau d'alimentation électrique continu. Le régulateur **26'** délivre une consigne de puissance $P_m^*$ pour la régulation de la tension continue dudit convertisseur **10**.

Le module de contrôle **20'** comprend de plus un module diviseur **36** permettant de diviser ladite puissance $P_m^*$ par une valeur nominale de la tension $v_{dc}$ au point de connexion du convertisseur au réseau d'alimentation électrique continu **120**, de manière à déterminer une consigne de courant de fonctionnement $I_m^*$. Ladite consigne de courant de fonctionnement $I_m^*$ est ensuite comparée à la consigne de courant interne $I_W^*$ afin de déterminer une consigne de courant $I_{dc}^*$ à transmettre au réseau d'alimentation électrique continu.

## Revendications

1. Convertisseur (10,10') de tension modulaire multi-niveaux, permettant de convertir une tension alternative en une tension continue et inversement, comportant une partie dite continue (10C) destinée à être reliée à un réseau d'alimentation électrique continu (120) et une partie dite alternative (10A) destinée à être reliée à un réseau d'alimentation électrique alternatif (110), le convertisseur comportant une pluralité de bras, chaque bras comportant un demi-bras supérieur et un demi-bras inférieur, chaque demi-bras comprenant une pluralité de sous-modules commandables individuellement par un organe de commande propre à chaque sous-module et chaque sous-module comprenant un condensateur connectable en série dans le demi-bras lorsque l'organe de commande du sous-module est dans un état commandé, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé correspondant à une capacité totale du demi-bras, le convertisseur comprenant en outre un module de contrôle (20,20') du convertisseur comprenant un calculateur (22,22') d'une consigne de commande interne ( $P_w^*, I_w^*$ ) du convertisseur, par exemple d'une consigne de puissance interne ou d'une consigne de courant, par application d'une fonction ayant un paramètre d'entrée réglable, le module de contrôle comportant en outre un régulateur (26,26') de la tension au point de connexion du convertisseur (10,10') au réseau d'alimentation électrique continu (120) configuré pour déterminer une consigne de puissance ( $P_m^*$ ) pour la régulation de la tension continue dudit convertisseur en fonction d'une consigne de tension au point de connexion du convertisseur au réseau d'alimentation électrique continu et d'une valeur de tension au point de connexion du convertisseur au réseau d'alimentation électrique continu prélevée sur ledit réseau d'alimentation électrique continu, le module de contrôle du convertisseur comprenant en outre un module de gestion de l'énergie (24,24') configuré pour délivrer une consigne de puissance de fonctionnement ( $P_f^*$ ) en fonction de la tension aux bornes de chaque condensateur modélisé, la consigne de puissance de fonctionnement étant utilisée par le module de contrôle pour déterminer une consigne de puissance ( $P_{ac}^*$ ) à transmettre au réseau d'alimentation électrique alternatif, le module de contrôle étant configuré pour réguler la tension au point de connexion du convertisseur au réseau d'alimentation électrique continu et la tension aux bornes de chaque condensateur modélisé en fonction de la consigne de commande interne et de la consigne de puissance à transmettre au réseau d'alimentation électrique alternatif.

2. Convertisseur selon la revendication **1,** dans lequel le calculateur (22) est configuré pour calculer la consigne de commande interne ( $P_w^*, I_w^*$ ) par application d'une fonction dérivée et d'une fonction de filtrage.

3. Convertisseur selon l'une quelconque des revendications **1** ou **2,** dans lequel le paramètre d'entrée réglable est un coefficient d'inertie virtuelle réglable $k_{VC}$.

4. Convertisseur selon l'une quelconque des revendications **1 à 3,** dans lequel la consigne de commande interne est une consigne de puissance interne $P_W^*$.

5. Convertisseur selon la revendication **4,** dans lequel le calculateur (22) est configuré pour calculer la consigne de puissance interne $P_W^*$ du convertisseur selon la fonction:

$$P_W^* = \frac{1}{2} C_{eq} k_{VC} \times \left( v_{dc}^2 \times \frac{s}{1 + \tau s} \right)$$

où $C_{eq} = 6C_{tot}$ et $C_{tot}$ est la capacité totale dans un demi bras du condensateur modélisé, $v_{dc}$ est la tension au point de connexion du convertisseur au réseau d'alimentation électrique continu et $\tau$ est une constante de temps.

6. Convertisseur selon l'une quelconque des revendications **1 à 5,** dans lequel la consigne de puissance interne $P_W^*$ est utilisée par le module de contrôle pour déterminer une consigne de puissance $P_{dc}^*$ à transmettre au réseau d'alimentation électrique continu (120).

7. Convertisseur selon l'une quelconque des revendications **1 à 3,** dans lequel la consigne de commande interne est une consigne de courant interne $I_W^*$.

8. Convertisseur selon la revendication **7,** dans lequel le calculateur (22') est configuré pour calculer la consigne de courant interne $I_W^*$ selon la fonction:

$$I_W^* = C_{eq} k_{VC} \times \left( v_{dc} \times \frac{s}{1 + \tau s} \right)$$

où $C_{eq} = 6C_{tot}$ et $C_{tot}$ est la capacité totale dans un demi bras du condensateur modélisé, $v_{dc}$ est la tension au point de connexion du convertisseur au réseau d'alimentation électrique continu et $\tau$ est une constante de temps.

9. Convertisseur selon la revendication **7** ou **8,** dans lequel la consigne de courant interne $I_W^*$ est utilisée par le module de contrôle pour déterminer une consigne de courant $I_{dc}^*$ à transmettre au réseau d'alimentation électrique continu (120).

10. Convertisseur selon l'une quelconque des revendications **1 à 9,** dans lequel le module de gestion de l'énergie (24,24') reçoit en entrée le résultat d'une comparaison entre une consigne de tension aux bornes de chaque condensateur modélisé, élevée au carré, et une moyenne du carré des tensions aux bornes des condensateurs modélisés.

**11.** Convertisseur selon l'une quelconque des revendications **1 à 10,** dans lequel le module de contrôle (20,20') est configuré pour effectuer un changement de variable afin de contrôler des variables intermédiaires de courant $i_{diff}$ et $i_{gd}$ et de tension $v_{diff}$ et $v_{gd}$, où $i_{diff}$ et $v_{diff}$ sont associées au réseau d'alimentation électrique continu (120) et $i_{gd}$ et $v_{gd}$ sont associées au réseau d'alimentation électrique alternatif (110).

**12.** Convertisseur selon la revendication **11,** dans lequel le module de contrôle comporte un régulateur (28,28') du courant $i_{gd}$ ayant en entrée une consigne

$$i_{gd}^*$$

correspondant au courant $i_{gd}$.

**13.** Convertisseur selon la revendication **11** ou **12,** dans lequel le module de contrôle comporte un régulateur (30,30') du courant $i_{diff}$ ayant en entrée une consigne

$$i_{diff}^*$$

correspondant au courant $i_{diff}$.

**14.** Procédé de contrôle d'un convertisseur (10,10') de tension modulaire multi-niveaux, le convertisseur permettant de convertir une tension alternative en une tension continue et inversement, et comportant une partie dite continue (10C) destinée à être reliée à un réseau d'alimentation électrique continu (120) et une partie dite alternative (10A) destinée à être reliée à un réseau d'alimentation électrique alternatif (110), le convertisseur comportant une pluralité de bras, chaque bras comportant un demi-bras supérieur et un demi-bras inférieur, chaque demi-bras comprenant une pluralité de sous-modules commandables individuellement par un organe de commande du sous-module et comprenant un condensateur connecté en série dans le demi-bras dans un état commandé de l'organe de commande du sous-module, chaque demi-bras pouvant être modélisé par une source de tension modélisée associée à un rapport cyclique dépendant d'un nombre de condensateurs mis en série dans le demi-bras, chaque source de tension modélisée étant associée en parallèle à un condensateur modélisé correspondant à une capacité totale du demi-bras, le procédé comprenant en outre un calcul d'une consigne de commande interne du convertisseur, par exemple d'une consigne de puissance interne ou d'une consigne de courant, par application d'une fonction ayant un paramètre d'entrée réglable, le procédé comprenant une étape de régulation de la tension au point de connexion du convertisseur (10,10') au réseau d'alimentation électrique continu (120) comprenant la détermination d'une consigne de puissance (

$$P_m^*$$

) pour la régulation de la tension continue dudit convertisseur en fonction d'une consigne de tension au point de connexion du convertisseur au réseau d'alimentation électrique continu et d'une valeur de tension au point de connexion du convertisseur au réseau d'alimentation électrique continu prélevée sur ledit réseau d'alimentation électrique continu, **le** procédé comprenant

- une étape de détermination d'une consigne de puissance de fonctionnement en fonction de la tension aux bornes de chaque condensateur modélisé ;
- une étape de détermination d'une consigne de puissance à transmettre au réseau d'alimentation électrique alternatif à partir de la consigne de puissance de fonctionnement ; et
- une étape de régulation de la tension au point de connexion du convertisseur au réseau d'alimentation électrique continu et de la tension aux bornes de chaque condensateur modélisé en fonction de ladite consigne de commande interne et de ladite consigne de puissance à transmettre au réseau d'alimentation électrique alternatif.

**15.** Procédé de contrôle d'un convertisseur selon la revendication **14,** dans lequel le paramètre d'entrée réglable est un coefficient d'inertie virtuelle réglable $k_{VC}$.

**Patentansprüche**

**1.** Mehrstufiger modularer Spannungswandler (10, 10'), der ermöglicht, eine Wechselspannung in eine Gleichspannung und umgekehrt umzuwandeln, beinhaltend einen sogenannten Gleichspannungsteil (10C), der dazu gedacht ist, mit einem Gleichstromversorgungsnetz (120) verbunden zu sein, und einen sogenannten Wechselspannungsteil (10A), der dazu gedacht ist, mit einem Wechselstromversorgungsnetz (110) verbunden zu sein, wobei der Wandler mehrere Arme beinhaltet, wobei jeder Arm einen oberen Halbarm und einen unteren Halbarm beinhaltet, wobei jeder Halbarm mehrere Untermodule umfasst, die einzeln durch ein für jedes Untermodul eigenes Steuerelement steuerbar sind, und jedes Untermodul einen Kondensator umfasst, der in Reihe mit dem Halbarm verbindbar ist, wenn das Steuerelement des Untermoduls in einem gesteuerten Zustand ist, wobei jeder Halbarm durch eine modellierte Spannungsquelle modelliert werden kann, die mit einem Tastverhältnis assoziiert ist, das von einer Anzahl an Kondensatoren abhängt, die in dem Halbarm in Reihe geschaltet ist, wobei jede modellierte Spannungsquelle parallel mit einem modellierten Kondensator assoziiert ist, der einer Gesamtkapazität des Halbarms entspricht, wobei der Wandler ferner ein Steuermodul (20, 20') des Wandlers umfasst, das einen Rechner (22, 22') eines internen Steuersollwertes ($P^*_w$, $I^*_w$) des Wandlers, zum Beispiel eines internen Leistungssollwertes oder eines Stromsollwertes, durch Anwendung einer Funktion mit einem regelbaren Eingangsparameter umfasst, wobei das Steuermodul ferner einen Regler (26, 26') der Spannung an dem Verbindungspunkt des Wandlers (10, 10') mit dem Gleichstromversorgungsnetz (120) beinhaltet, der dazu ausgestaltet ist, einen Leistungssollwert ($P^*_m$) für die Regelung der Gleichspannung des Wandlers in Abhängigkeit eines Spannungssollwertes an dem Verbindungspunkt des Wandlers mit dem Gleichstromversorgungsnetz und eines Spannungswertes an dem Verbindungspunkt des Wandlers mit dem Gleichstromversorgungsnetz, der an dem Gleichstromversorgungsnetz erhoben wird, zu bestimmen, wobei das Steuermodul des Wandlers ferner ein Energieverwaltungsmodul (24, 24') umfasst, das dazu ausgestaltet ist, einen Betriebsleistungssollwert ($P^*_f$) in Abhängigkeit der Spannung an den Anschlüssen jedes modellierten Kondensators zu liefern, wobei der Betriebsleistungssollwert durch das Steuermodul verwendet wird, um einen Leistungssollwert ($P^*_{ac}$) zum Übertragen an das Wechselstromversorgungsnetz zu bestimmen, wobei das Steuermodul dazu ausgestaltet ist, die Spannung an dem Verbindungspunkt des Wandlers mit dem Gleichstromversorgungsnetz und die Spannung an den Anschlüssen jedes modellierten Kondensators in Abhängigkeit des internen Steuersollwertes und des Leistungssollwertes zum Übertragen an das Wechselstromversorgungsnetz zu regeln.

2. Wandler nach Anspruch 1, wobei der Rechner (22) dazu ausgestaltet ist, den internen Steuersollwert ($P^*_w$, $I^*_w$) durch Anwendung einer abgeleiteten Funktion und einer Filterfunktion zu berechnen.

3. Wandler nach einem der Ansprüche 1 oder 2, wobei der regelbare Eingangsparameter ein regelbarer virtueller Trägheitskoeffizient $kvc$ ist.

4. Wandler nach einem der Ansprüche 1 bis 3, wobei der interne Steuersollwert ein interner Leistungssollwert $P^*_w$ ist.

5. Wandler nach Anspruch 4, wobei der Rechner (22) dazu ausgestaltet ist, den internen Leistungssollwert $P^*_w$ des Wandlers zu berechnen gemäß der Funktion:

$$P_W^* = \frac{1}{2} C_{eq} k_{VC} \times (v_{dc}^2 \times \frac{s}{1 + \tau s})$$

wobei $C_{eq} = 6C_{tot}$ und $C_{tot}$ die Gesamtkapazität in einem Halbarm des modellierten Wandlers ist, $v_{dc}$ die Spannung an dem Verbindungspunkt des Wandlers mit dem Gleichstromversorgungsnetz ist und $\tau$ eine Zeitkonstante ist.

6. Wandler nach einem der Ansprüche 1 bis 5, wobei der interne Leistungssollwert $P^*_w$ durch das Steuermodul verwendet wird, um einen Leistungssollwert $P^*_{dc}$ zum Übertragen an das Gleichstromversorgungsnetz (120) zu bestimmen.

7. Wandler nach einem der Ansprüche 1 bis 3, wobei der interne Steuersollwert ein interner Stromwert $I^*_w$ ist.

8. Wandler nach Anspruch 7, wobei der Rechner (22') dazu ausgestaltet ist, den internen Stromsollwert $I^*_W$ zu berechnen gemäß der Funktion:

$$I_W^* = C_{eq} k_{VC} \times (v_{dc} \times \frac{s}{1 + \tau s})$$

wobei $C_{eq} = 6C_{tot}$ und $C_{tot}$ die Gesamtkapazität in einem Halbarm des modellierten Wandlers ist, $v_{dc}$ die Spannung an dem Verbindungspunkt des Wandlers mit dem Gleichstromversorgungsnetz ist und $\tau$ eine Zeitkonstante ist.

9. Wandler nach Anspruch 7 oder 8, wobei der interne Stromsollwert $I^*_W$ durch das Steuermodul verwendet wird, um einen Stromsollwert $I^*_{dc}$ zum Übertragen an das Gleichstromversorgungsnetz (120) zu bestimmen.

10. Wandler nach einem der Ansprüche 1 bis 9, wobei das Energieverwaltungsmodul (24, 24') am Eingang das Ergebnis eines Vergleichs zwischen einem Spannungssollwert an den Anschlüssen jedes modellierten Kondensators ins Quadrat und einem Mittel des Quadrats der Spannungen an den Anschlüssen der modellierten Kondensatoren empfängt.

11. Wandler nach einem der Ansprüche 1 bis 10, wobei das Steuermodul (20, 20') dazu ausgestaltet ist, eine Änderung der Variablen zu bewirken, um Zwischenvariablen von Strom $i_{diff}$ und $i_{gd}$ und von Spannung $v_{diff}$ und $v_{gd}$ zu steuern, wobei $i_{diff}$ und $v_{diff}$ mit dem Gleichstromversorgungsnetz (120) assoziiert sind und $i_{gd}$ und $v_{gd}$ mit dem Wechselstromversorgungsnetz (110) assoziiert sind.

12. Wandler nach Anspruch 11, wobei das Steuermodul einen Regler (28, 28') des Stroms $i_{gd}$ beinhaltet, der am Eingang einen Sollwert $i^*_{gd}$ entsprechend dem Strom $i_{gd}$ aufweist.

**13.** Wandler nach Anspruch 11 oder 12, wobei das Steuermodul einen Regler (30, 30') des Stroms $i_{diff}$ beinhaltet, der am Eingang einen Sollwert $i^*_{diff}$ entsprechend dem Strom $i_{diff}$ aufweist.

**14.** Verfahren zum Steuern eines mehrstufigen modularen Spannungswandlers (10, 10'), wobei der Wandler ermöglicht, eine Wechselspannung in eine Gleichspannung und umgekehrt umzuwandeln, und beinhaltend einen sogenannten Gleichspannungsteil (10C), der dazu gedacht ist, mit einem Gleichstromversorgungsnetz (120) verbunden zu sein, und einen sogenannten Wechselspannungsteil (10A), der dazu gedacht ist, mit einem Wechselstromversorgungsnetz (110) verbunden zu sein, wobei der Wandler mehrere Arme beinhaltet, wobei jeder Arm einen oberen Halbarm und einen unteren Halbarm beinhaltet, wobei jeder Halbarm mehrere Untermodule umfasst, die einzeln durch ein Steuerelement des Untermoduls steuerbar sind, und einen Kondensator umfasst, der in einem gesteuerten Zustand des Steuerelements des Untermoduls in Reihe mit dem Halbarm verbunden ist, wobei jeder Halbarm durch eine modellierte Spannungsquelle modelliert werden kann, die mit einem Tastverhältnis assoziiert ist, das von der Anzahl an Kondensatoren abhängt, die in dem Halbarm in Reihe geschaltet ist, wobei jede modellierte Spannungsquelle parallel mit einem modellierten Kondensator assoziiert ist, der einer Gesamtkapazität des Halbarms entspricht, wobei das Verfahren ferner eine Berechnung eines internen Steuersollwertes des Wandlers, zum Beispiel eines internen Leistungssollwertes oder eines Stromsollwertes, durch Anwendung einer Funktion mit einem regelbaren Eingangsparameter umfasst, wobei das Verfahren einen Schritt der Regelung der Spannung an dem Verbindungspunkt des Wandlers (10, 10') mit dem Gleichstromversorgungsnetz (120) umfasst, umfassend die Bestimmung eines Leistungssollwertes ($P^*_m$) für die Regelung der Gleichspannung des Wandlers in Abhängigkeit eines Spannungssollwertes an dem Verbindungspunkt des Wandlers mit dem Gleichstromversorgungsnetz und eines Spannungswertes an dem Verbindungspunkt des Wandlers mit dem Gleichstromversorgungsnetz, der an dem Gleichstromversorgungsnetz erhoben wird, wobei das Verfahren umfasst:

• einen Schritt der Bestimmung eines Betriebsleistungssollwertes in Abhängigkeit der Spannung an den Anschlüssen jedes modellierten Kondensators,
• einen Schritt des Bestimmens eines Leistungssollwertes zum Übertragen an das Wechselstromversorgungsnetz anhand des Betriebsleistungssollwertes, und
• einen Schritt des Regelns der Spannung an dem Verbindungspunkt des Wandlers mit dem Gleichstromversorgungsnetz und der Spannung an den Anschlüssen jedes modellierten Kondensators in Abhängigkeit des internen Steuersollwertes und des Leistungssollwertes zum Übertragen an das Wechselstromversorgungsnetz.

**15.** Verfahren zum Steuern eines Wandlers nach Anspruch 14, wobei der regelbare Eingangsparameter ein regelbarer virtueller Trägheitskoeffizient *kvc* ist.

**Claims**

**1.** A multi-level modular voltage converter (10,10') for converting alternating voltage into direct voltage and inversely, comprising a so-called direct part (10C) intended to be connected to a DC electric power supply network (120) and a so-called alternating part (10A) intended to be connected to an AC electric power network (110), the converter comprising a plurality of legs, each leg comprising an upper arm and a lower arm, each arm comprising a plurality of sub-modules controllable individually by a control member specific to each sub-module and each sub-module comprising a capacitor connectable in series in the arm when the control member of the sub-module is in a controlled state, each arm which can be modelled by a modelled voltage source connected to a duty cycle dependent on a number of capacitors placed in series in the arm, each modelled voltage source being connected in parallel to a modelled capacitor corresponding to a total capacity of the arm, the converter further comprising a control module (20,20') of the converter comprising a computer (22,22') of an internal command setpoint ($P^*_w$, $I^*_w$) of the converter, for example an internal power setpoint or a current setpoint, by application of a function having an adjustable input parameter, the control module further comprising a regulator (26,26') of the voltage at the point of connection of the converter (10,10') to the DC electric power supply network (120) configured to determine a power setpoint ($\mathbf{P}^*_\mathbf{m}$) for regulation of the direct voltage of said converter as a function of a voltage setpoint at the point of connection of the converter to the DC electric power supply network and of a voltage value at the point of connection of the converter to the DC electric power supply network collected on said DC electric power supply network, the control module of the converter further comprising an energy management module (24,24') configured to deliver an operating power setpoint ($P^*_f$) as a function of the voltage at the terminals of each modelled capacitor, the operating power setpoint being utilised by the control module to determine a power setpoint ( $P_{ac}^*$ ) to be transmitted to the AC electric power supply network, the control module being configured to regulate the voltage at the point of connection of the converter to the DC electric power supply network and the voltage at the terminals of each modelled capacitor as a function of the internal command setpoint and of the power setpoint to be transmitted to the AC electric power supply network.

2. The converter according to claim 1, wherein the computer (22) is configured to calculate the internal command setpoint ( $P_w^*, I_w^*$ ) by application of a derived function and a filtering function.

3. The converter according to any one of claims 1 or 2, wherein the adjustable input parameter is an adjustable virtual inertia coefficient $k_{VC}$.

4. The converter according to any one of claims 1 to 3, wherein the internal command setpoint is an internal power setpoint $P_W^*$.

5. The converter according to claim 4, wherein the computer (22) is configured to calculate the internal power setpoint $P_W^*$ of the converter according to the function:

$$P_W^* = \frac{1}{2} C_{eq} k_{VC} \times (v_{dc}^2 \times \frac{s}{1 + \tau s})$$

where $C_{eq} = 6C_{tot}$ and $C_{tot}$ is the total capacity in an arm of the modelled capacitor, $v_{dc}$ is the voltage at the point of connection of the converter to the DC electric power supply network and $\tau$ is a time constant.

6. The converter according to any one of claims **1 to 5,** wherein the internal power setpoint $P_W^*$ is utilised by the control module to determine a power setpoint $P_{dc}^*$ to be transmitted to the DC electric power supply network (120).

7. The converter according to any one of claims **1** to **3,** wherein the internal command setpoint is an internal current setpoint $I_W^*$.

8. The converter according to claim **7,** wherein the computer (22') is configured to calculate the internal current setpoint $I_W^*$ according to the function:

$$I_W^* = C_{eq} k_{VC} \times (v_{dc} \times \frac{s}{1 + \tau s})$$

where $C_{eq} = 6C_{tot}$ and $C_{tot}$ is the total capacity in an arm of the modelled capacitor, $v_{dc}$ is the voltage at the point of connection of the converter to the DC electric power supply network and $\tau$ is a time constant.

9. The converter according to claim **7** or **8,** wherein the internal current setpoint $I_W^*$ is utilised by the control module to determine a current setpoint $I_{dc}^*$ to be transmitted to the DC electric power supply network (120).

10. The converter according to any one of claims **1** to **9,** wherein the energy management module (24,24') receives at input the result of comparison between a voltage setpoint at the terminals of each modelled capacitor, squared, and an average of the square of the voltages at the terminals of the modelled capacitors.

11. The converter according to any one of claims **1** to **10,** wherein the control module (20,20') is configured to make a change in variable to control intermediate variables of current $i_{diff}$ and $i_{gd}$ and voltage $v_{diff}$ and $v_{gd}$, where $i_{diff}$ and $v_{diff}$ are related to the DC electric power supply network (120) and $i_{gd}$ and $v_{gd}$ are related to the AC electric power supply network (110).

12. The converter according to claim **11,** wherein the control module comprises a regulator (28,28') of the current $i_{gd}$ having at input a setpoint $i_{gd}^*$ corresponding to the current $i_{gd}$.

13. The converter according to claim **11** or **12,** wherein the control module comprises a regulator (30,30') of the current $i_{diff}$ having at input a setpoint $i_{diff}^*$ corresponding to the current $i_{diff}$.

14. A control method of a multi-level modular voltage converter (10,10'), the converter converting alternating voltage into direct voltage and inversely, and comprising a so-called direct part (10C) intended to be connected to a DC electric power supply network (120) and a so-called alternating part (10A) intended to be connected to an AC electric power network (110), the converter comprising a plurality of legs, each leg comprising an upper arm and a lower arm, each arm comprising a plurality of sub-modules controllable individually by a control member of the sub-module and comprising a capacitor connected in series in the arm in a controlled state of the control member of the sub-module, each arm capable of being modelled by a modelled voltage source connected to a duty cycle dependent on a number of capacitors placed in series in the arm, each modelled voltage source being connected in parallel to a modelled capacitor corresponding to a total capacity of the arm, the method further comprising calculation of an internal command setpoint of the converter, for example an internal power setpoint or a current setpoint, by application of a function having an adjustable input parameter, the method comprising a step for regulating the voltage at the point of connection of the converter (10,10') to the DC electric power supply network (120) comprising determination of a power setpoint ( $P_m^*$ ) for regulation of the direct voltage of said converter as a function of a voltage setpoint at the point of connection of the converter to the DC electric power supply network and of a voltage value at the point of connection of the converter to the DC electric power supply network collected on said DC electric power supply network The method comprising:

- a step for determining an operating power setpoint as a function of the voltage at the terminals of each modelled capacitor;
- a step for determining a power setpoint to be transmitted to the AC electric power supply network from the operating power setpoint; and
- a step for regulating the voltage at the point of connection of the converter to the DC electric power supply network and of the voltage at the terminals of each modelled capacitor as a function of said internal command setpoint and of said power setpoint to be transmitted to the AC electric power supply network.

15. A control method of a converter according to claim 14, wherein the adjustable input parameter is an adjustable virtual inertia coefficient $k_{VC}$.

FIG.1

ART ANTERIEUR

# FIG.2
## ART ANTERIEUR

# FIG.3
## ART ANTERIEUR

FIG.4
ART ANTERIEUR

**FIG.5**

**FIG.7**

**FIG.13**

FIG.6

FIG.9

FIG.8

FIG.10

FIG.11

EP 3 649 728 B1

FIG.12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1557501

- WO 2017021642 A1

**Littérature non-brevet citée dans la description**

- **SAMIMI et al.** *Control of DC bus voltage with a Modular Multilevel Converter*, 2015